# EUROPEAN PATENT APPLICATION

(11) **EP 4 235 546 A1**
(43) Date of publication of application: **30.08.2023**
(21) Application number: 23158610.8
(22) Date of filing: 24.02.2023
(51) Int. Cl.: G06Q 10/10, G06Q 50/20, G09B 7/00

(54) **SYSTEM AND METHOD FOR PROCTORING ONLINE EXAMS**

(30) Priority: 25.02.2022 US 202217681273
(71) Applicant: Azim, Adham Abdel, Orinda, CA 94563 (US)
(72) Inventor: Azim, Adham Abdel, Orinda, CA 94563 (US)
(74) Representative: Marks & Clerk LLP

(57) **Abstract**

A system for proctoring an online exam is provided. The system includes a computing device including a first recording device facing towards a user taking the exam and configured to capture images, video, and audio to enable monitoring the user and surrounding environment for possible instances of cheating. The system also includes a mobile device including a second recording device facing towards the computing device and configured to capture images, video, and audio to enable monitoring of the first computing device and workspace for possible instances of cheating. The computing device and the mobile device analyze the captured recordings to detect and log anomalous events. The system may further include a server configured to analyze log files and rate user activities during the exam based on a risk level of cheating.

## Description

### FIELD OF THE INVENTION

The present invention is directed to a system and method for proctoring an online exam. In particular, the present invention is a system including a computing device with a first recording device and a mobile device with a second recording device that are each configured to capture images, video, and/or audio to enable monitoring user activities for possible instances of cheating during the exam.

### BACKGROUND OF THE INVENTION

The current method of proctoring online exams involves either locking the exam-taker's computer or recording the exam taker's screen while he or she is taking the exam, plus utilizing a video camera mounted directly to the computer to record the exam-taker taking the online exam. However, this existing system has a drawback in that there are multiple blind-dead spots right under the computer screen (e.g., between the keyboard and the screen), above the screen, and to the sides of the screen where an exam-taker can potentially keep reading material, tablets or phones to surf the Internet for answers to exam questions.

### SUMMARY OF THE INVENTION

In order to address the above-described deficiencies in the art and other needs, an improved system and method for proctoring online exams is provided, which includes a mobile software application that operates on a mobile phone or tablet (i.e., mobile computing device) that includes a (second) video camera. The mobile computing device is mounted in a location next to or behind the exam-taker during the exam, and may communicate in real-time with the computer that the exam-taker is using to take the exam, and also with a server that stores recordings and analyzes log files to determine cheating risk levels based on certain user activities detected during the exam. The mobile computing device is positioned in a location that will allow its video camera to capture all of the blind-dead spots referred to above. The video camera on the mobile computing device will be a component that is necessary for the exam and the exam will not start (initially) or resume (after stopping or pausing the exam) if this camera is not located and maintained in the right position throughout the course of the exam taking process.

An aspect of the present invention is directed to a system and a method programmed for execution in a computing environment for proctoring an online exam. The system includes a first computing device and a second computing device of a user taking the online exam. The first computing device is in communication with a network and includes a first memory storing first computer executable instructions configured for administering the online exam, a first processor configured to execute the first executable instructions, a first display configured to display the online exam, and a first recording device facing towards the user taking the online exam and configured to capture one or more images, video, or audio to monitor the user and a surrounding environment of the user for possible instances of cheating. The second computing device is in communication with the first computing device over the network, wherein the second computing device is a mobile device. The second computing device includes a second memory storing second computer executable instructions for proctoring the online exam, a second processor configured to execute the second computer executable instructions, and a second recording device facing towards the first computing device and configured to capture one or more images, video, or audio to monitor the first computing device and a workspace of the user for possible instances of cheating.

In another aspect, the first computing device is configured to perform at least one of identifying the user taking the online exam as an authorized user based on the at least one images, video, or audio captured using the first recording device, or recording one or more screen shots or video clips of the first display while the user is taking the online exam.

In a further aspect, a quick response (QR) code is displayed on the first display of the first computing device.

In some example embodiments, the second computing device is configured to read the QR code displayed on the first display of the first computing device using the second recording device, and verify that the second computing device is in a predetermined position relative to the first computing device using the QR code displayed on the first display. In response to successfully verifying that the second computing device is in the predetermined position, the second computing device is configured to send a command to the first computing device to begin the online exam or allow the online exam to continue. In response to determining that the second computing device is not in the predetermined position, the second computing device is configured to send a command to the first computing device to pause the online exam, and output instructions asking the user taking the online exam to adjust positioning of the second computing device or remove any obstructions so that the QR code can be verified.

In some other example embodiments, the system further comprises a server in communication with the network, wherein the second computing device is configured to periodically capture one or more images of the QR code using the second recording device, and send the one or more images of the QR code to the server to verify that the second computing device is in a predetermined position relative to the first computing device using the QR code displayed on the first display. In response to the server successfully verifying that the second computing device is in the predetermined position, the second computing device or the first computing device receives a command from the server to begin the online exam or allow the online exam to continue. In response to the server determining that the second computing device is not in the predetermined position, the second computing device or the first computing device receives a command from the server to pause the online exam and output instructions asking the user taking the online exam to adjust positioning of the second computing device or remove any obstructions so that the QR code can be verified.

In another aspect, in response to detecting a possible instance of cheating, the first computing device is configured to pause the online exam, output a visible or audible warning to the user taking the online exam indicating the possible instance of cheating and instructing the user how to remedy the possible instance of cheating, and resume the online exam in response to the first computing device determining that the user has addressed the possible instance of cheating. In response to detecting a probable instance of cheating based on a pre-defined threshold or failure of the user to address the possible instance of cheating, the first computing device is configured to terminate the online exam and transmit a notification to the server.

In another aspect, in response to detecting a possible instance of cheating, the second computing device is configured to transmit a command to the computing device to pause the exam, output a visible or audible warning to the user taking the online exam indicating the possible instance of cheating and instructing the user how to remedy the possible instance of cheating, and transmit a command to the first computing device to resume the online exam in response to the second computing device determining that the user has addressed the possible instance of cheating. In response to detecting a probable instance of cheating based on a pre-defined threshold or failure of the user to address the possible instance of cheating, the second computing device is configured to transmit a command to the first computing device to terminate the online exam, and transmit a notification to the server indicating the probable instance of cheating by the user.

In another aspect, the first computing device is configured to analyze the one or more images, video, or audio captured via the first recording device to identify the possible instances of cheating based on at least one of failure to identify the user as an authorized test taker, detection of an unauthorized person taking the online exam, detection of an unauthorized person being present in the surrounding environment of the user, detection of the opening of a secondary browser window or an attempt to search an exam question while the online exam is taking place, or detection of unauthorized materials in the surrounding environment of the user.

In another aspect, the second computing device is configured to analyze the one or more images, video, or audio captured via the second recording device to identify the possible instance of cheating based on at least one of failure to read the QR code displayed on the first display of the first computing device for a threshold period of time, detection of an unauthorized person being present in the workspace of the user, or detection of unauthorized materials in the workspace of the user.

In a further aspect, the second computing device is mounted on a desk or chair of the user or a separate stand located behind the user, and is positioned within a defined height range from the floor, a defined distance range with respect to the first computing device, and a defined viewing angle range so as to enable the second recording device to capture one or more images of the QR code on the first display of the first computing device.

In another aspect, the second computing device is mounted to a motorized apparatus that enables three hundred and sixty degree rotation of the second computing device while the second recording device captures the one or more images, video, and audio, and wherein the second computing device is configured to transmit a command to the motorized apparatus to rotate according to at least one of predefined time intervals and/or at random time intervals during the online exam, or in response to detection of a possible instance of cheating based on analyzing the one or more images, video, or audio captured by the first recording device of the first computing device or the second recording device of the second computing device.

In some example embodiments, the second computing device further includes a third recording device facing in a direction opposite the second recording device, wherein the third recording device is configured to capture one or more of images, video, and audio to enable monitoring the surrounding environment of the user for possible instances of cheating.

In another aspect, the first computing device is configured to analyze the one or more images, video, or audio captured using the first recording device to detect an anomalous event indicating a possible instance of cheating; generate a log entry identifying the anomalous event and a time-stamp; and transmit a proctoring log file including the log entry, along with the captured one or more images, video, or audio, to the server for storage and further analysis.

In a further aspect, the server is configured to receive the proctoring log file along with the one or more images, video, or audio captured using the first recording device from the first computing device; analyze the proctoring log file and the one or more images, video, or audio based on one or more of artificial intelligence (Al) and machine learning (ML) algorithms to generate a rating associated with a level of user activities during the online exam as a low risk, medium risk, or high risk of cheating; and enable a proctor to access the proctoring log file, the captured one or more images, video or audio, and review the rating associated with the level of user activities during the online exam to confirm whether or not cheating has occurred.

In another aspect, the second computing device is configured to analyze the one or more images, video, or audio captured using the second recording device to detect an anomalous event indicating a possible instance of cheating; generate a log entry identifying the anomalous event and a time-stamp; and transmit a proctoring log file including the log entry, along with the captured one or more images, video, or audio, to the server for storage and further analysis.

In a further aspect, the server is configured to receive the proctoring log file along with the one or more images, video, or audio captured using the second recording device from the second computing device; analyze the proctoring log file and the one or more images, video, or audio based on one or more of artificial intelligence (Al) and machine learning (ML) algorithms to generate a rating associated with a level of user activities during the online exam as a low risk, medium risk, or high risk of cheating; and enable a proctor to access the proctoring log file, the captured images, video or audio, and review the rating associated with the level of user activities during the online exam to confirm whether or not cheating has occurred.

In another aspect, the system further includes the server in communication with the network, wherein the server is configured to perform at least one of identifying the user as an authorized user based on comparing the one or more images, video, or audio captured via the first recording device to stored authentication information associated with the authorized user, verifying a QR code associated with the online exam that is displayed on the first display of the first computing device and captured via the second recording device of the second computing device, receiving and storing the one or more images, video, or audio captured by the first recording device of the first computing device and the second recording device of the second computing device, analyzing the one or more images, video, or audio captured by the first recording device of the first computing device and the second recording device of the second computing device to identify or confirm the possible instance of cheating, and transmitting a notification to a proctor computing device in response to detection of a possible instance of cheating by the second computing device or the first computing device of the user or confirmation of the possible instance of cheating by the server.

In another aspect the system further includes a proctor computing device in communication with the network, wherein the proctor computing device is configured to perform at least one of receiving a notification from the first computing device, the second computing device, or the server in connection with detection of a possible instance of cheating by the user taking the online exam, establishing a communication session with the user taking the online exam via the second computing device or the first computing device of the user to provide instructions or assistance to the user, or to enable live remote monitoring of the user by a proctor during the exam, or accessing the server to enable the proctor to manually review the one or more images, video, or audio captured by the first recording device of the first computing device and the second recording device of the second computing device that are stored by the server to determine whether the detection of the possible instance of cheating by the server or by the second computing device or the first computing device of the user is confirmed or a false alarm.

According to a further aspect of the invention, there is provided a method for proctoring an online exam taken by a user utilizing a mobile device in communication with a first computing device over a network, the method comprising:
positioning the mobile device so that a recording device of the mobile device faces towards the first computing device; and
capturing one or more of images, video, or audio using the recording device of the mobile device to monitor the first computing device and a workspace and surrounding environment of the user for possible instances of cheating during the online exam.

In some embodiments, positioning the mobile device includes mounting the mobile device at a location so that the mobile device is positioned within a defined height range from the floor, a defined distance range with respect to the first computing device, and a defined viewing angle range to capture one or more images of the display of the first computing device.

In some embodiments, a quick response (QR) code is displayed on a display of the first computing device, and the method further comprises:
reading the QR code displayed on the first display of the first computing device using the recording device of the mobile device; and
verifying that the mobile device is in a predetermined position relative to the first computing device using the QR code displayed on the first display.

In some embodiments, the method comprises sending a command to the first computing device to begin the online exam or allow the online exam to continue in response to successfully verifying that the mobile device is in the predetermined position.

In some embodiments, the method comprises sending a command to the first computing device to pause the online exam, and outputting instructions asking the user taking the online exam to adjust positioning of the mobile device to remove any obstructions so that the QR code can be verified, in response to determining that the mobile device is not in the predetermined position.

In some embodiments, a QR code is displayed on a display of the first computing device, wherein the mobile device is further in communication with a server over the network, and the method further comprises:
periodically capturing one or more images of the QR code using the recording device of the mobile device; and
sending the one or more images of the QR code to the server to verify that the mobile device is in a predetermined position relative to the first computing device using the QR code displayed on the display of the first computing device.

In some embodiments, the method comprises at least one of:
receiving a command from the server to begin the online exam or allow the online exam to continue in response to the server successfully verifying that the mobile device is in the predetermined position; or
receiving a command from the server to pause the online exam and output instructions asking the user taking the online exam to adjust positioning of the mobile device or remove any obstructions so that the QR code can be verified in response to the server determining that the mobile device is not in the predetermined position.

In some embodiments, in response to detecting a possible instance of cheating, the method further comprises:
transmitting a command to the first computing device to pause the online exam;
outputting a visible or audible warning to the user taking the exam indicating the possible instance of cheating and instructing the user how to remedy the possible instance of cheating; and
transmitting a command to the first computing device to resume the online exam in response to determining that the user has addressed the possible instance of cheating.

In some embodiments, the method further comprises analyzing the one or more images, video, or audio captured via the recording device of the mobile device to identify the possible instance of cheating based on at least one of:
failure to read a QR code displayed on the display of the first computing device for a threshold period of time;
detection of an unauthorized person being present in the workspace or surrounding environment of the user; or
detection of unauthorized materials in the workspace or surrounding environment of the user.

In some embodiments, the mobile device is further in communication with a server over the network, and the method further comprises:
analyzing the one or more images, video, or audio captured using the recording device of the mobile device to detect an anomalous event indicating a possible instance of cheating;
generating a log entry identifying the anomalous event and a time-stamp; and
transmitting a proctoring log file including the log entry, along with the one or more images, video, or audio, to the server for storage, further analysis by the server, and enabling access by a proctor.

Additional benefits of the above-described system and method for proctoring an online exam are set forth in the following discussion.

### BRIEF DESCRIPTION OF THE DRAWINGS

The above-mentioned and other features and advantages of this invention, and the manner of attaining them, will become apparent and be better understood by reference to the following description of the invention in conjunction with the accompanying drawings, wherein:
FIG. 1 is a schematic diagram showing an exemplary system for proctoring an online exam in accordance with one aspect of the present invention;
FIGS. 2A and 2B are diagrams illustrating a physical setup of a first computing device and a second computing device (i.e., mobile device) in relation to an examinee taking the exam according to another aspect of the present invention;
FIG. 3 is a flow diagram of an embodiment of an algorithmic method performed by respective components of the system for proctoring an online exam;
FIG. 4A illustrates a method for proctoring an online exam from the perspective of a computing device of the examinee;
FIG. 4B illustrates a method for proctoring an online exam from the perspective of a mobile device of the examinee;
FIG. 4C illustrates a method for proctoring an online exam from the perspective of a server;
FIG. 5A illustrates an example process for QR code verification by the examinee mobile device in association with the method for proctoring an online exam;
FIG. 5B illustrates another example process for QR code verification by the server in association with the method for proctoring an online exam; and
FIG. 6 is a block diagram generally illustrating a computing environment in which the invention may be implemented.

### DETAILED DESCRIPTION OF THE INVENTION

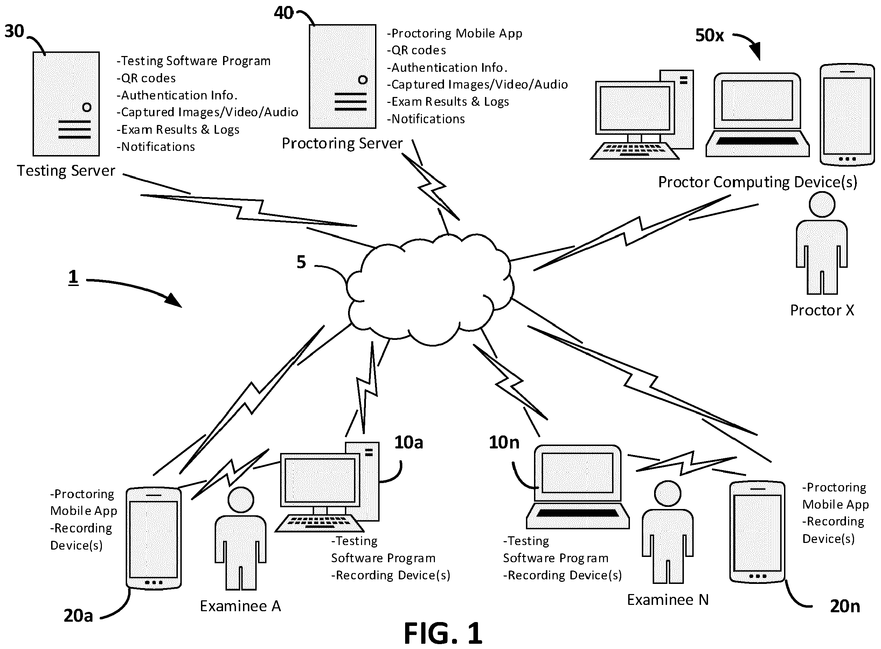

Referring to the drawings in detail, with particular reference to FIG. 1, an aspect of the present invention includes a system 1 that may be used to implement an algorithmic method for proctoring an online exam. Other aspects of the present invention will be discussed in more detail below.

As shown in FIG. 1, the system 1 may generally include one or more examinee computing devices 10a-10n, one or more examinee mobile devices 20a-20n, one or more servers (including a testing server 30 and/or a proctoring server 40, for example), and one or more proctor computing devices 50x. Each of the aforementioned components of system 1 may be in communication with each other through a network 5, such as a wide area network (WAN) and/or a local area network (LAN) and/or the Internet, through various wired and/or wireless connections. Each of these components of system 1 may include a memory, which may have various programs, applications, logic, algorithms, instructions, etc. stored therein. As such, the system and method are not limited to any specific hardware or software configuration, but may rather be implemented as computer executable instructions in any computing or processing environment, including in digital electronic circuitry or in computer hardware, firmware, device driver, or software. As will be discussed in more detail below, the system and method may be used to proctor online exams using multiple recording devices of the user taking the exam (also referred to herein as the examinee, such as Examinees A-N). The system and method may also be used to generate and communicate log files and ratings associated with cheating risk levels based on various detected user activities during the exam.

The examinee mobile devices 20a-20n may be any type of smartphone, tablet, or other mobile computing device including a processor capable of recording and displaying digital images, video, audio, performing operations for detecting anomalous events during the course of an exam, which may be indicative of potential instances of cheating by the user, and communicating with any one of examinee computing devices 10a-10n, servers 30 and/or 40, and one or more proctor computing devices 50x to implement an automated monitoring process for proctoring the online exam. Likewise, it should be understood that examinee computing devices 10a-10n may include a processor that is capable of recording and displaying digital images, video, audio, performing operations for detecting anomalous events during the course of the exam that potentially indicate the occurrence of cheating by the user, and communicating with any one of examinee mobile devices 20a-20n, servers 30 and/or 40, and proctor computing devices 50x to implement the automated monitoring process for proctoring the online exam.

The testing server 30 may be a computing device including a processor and memory for storing various data and executable instructions associated with the online exam, including but not limited to a testing software program, QR codes, authentication information (e.g., user credentials, biometrics), captured digital content (images, video, audio), exam results, exam logs, notifications and the like. Similarly, proctoring server 40 may be a computing device including a processor and memory for storing various data and executable instructions associated with the online exam, including but not limited to a proctoring mobile application, QR codes, authentication information (e.g., user credentials, biometrics), captured digital content (images, video, audio), exam results, exam logs, notifications and the like. Although two individual servers are depicted in the exemplary system shown in FIG. 1, example embodiments are not limited thereto and there may only be a single server that performs all of the respective functions of both servers 30 and 40, or multiple servers that perform one or more of these respective functions independently of the other servers. In addition, servers 30 and/or 40 may be equipped with various forms of artificial intelligence (Al) and/or machine learning (ML) algorithms for analyzing the captured digital content, anomalous events, and/or proctoring log files to generate ratings associated with cheating risk levels based on detected user activities during the exam. Trained models and various pattern recognition and scoring techniques may be utilized to perform the automated exam proctoring process, for example. The models may be trained by using supervising learning, whereby the models are supplied with examples of captured digital content, events and/or proctoring log files that correspond with known instances of cheating, and which are labelled as such. The models may also be supplied with other examples of captured digital content, events and/or proctoring log files that are known to correspond to instances where cheating did not occur, and which are again labelled as such. Using the labelled data, the models may be trained to identify features in the data that correlate with a high probability of cheating. In some embodiments, where a proctor identifies a new instance of cheating, the proctor may include the captured digital content, anomalous events and/or proctoring log files from that instance to the training data, such that the models' ability to identify instances of cheating continues to evolve over time.

The proctor computing devices 50x may be any type of computing device or mobile device including a processor capable communicating with any one of examinee computing devices 10a-10n, examinee mobile devices 20a-20n, and servers 30 and 40. In addition, proctor computing devices 50x can access captured digital content (images, video, audio), exam results, exam logs, notifications and the like from servers 30 and/or 40, so that the proctor can manually review detected user activities during the exam to further investigate and confirm whether or not cheating has actually occurred during the exam.

According to an aspect, for example, the examinee will position examinee mobile device 20n in a location that will allow its integrated video camera to capture all of the blind-dead spots referred to above. The video camera on examinee mobile device 20n will be a component that is necessary for the exam and the exam will not start (initially) or resume (after stopping or pausing the exam) if this camera is not located and maintained in the correct position throughout the course of the exam taking process.

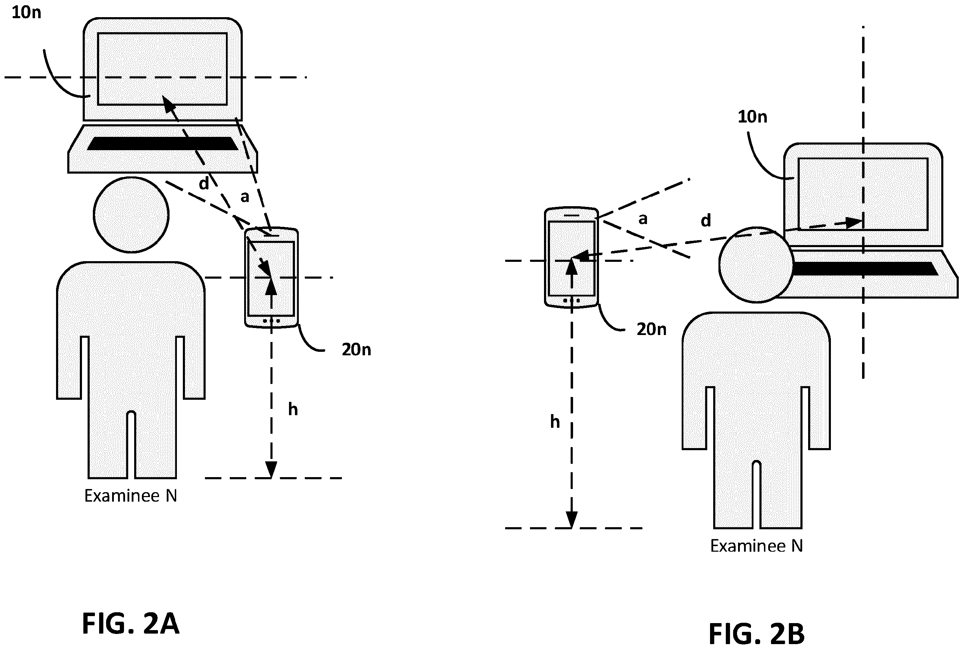

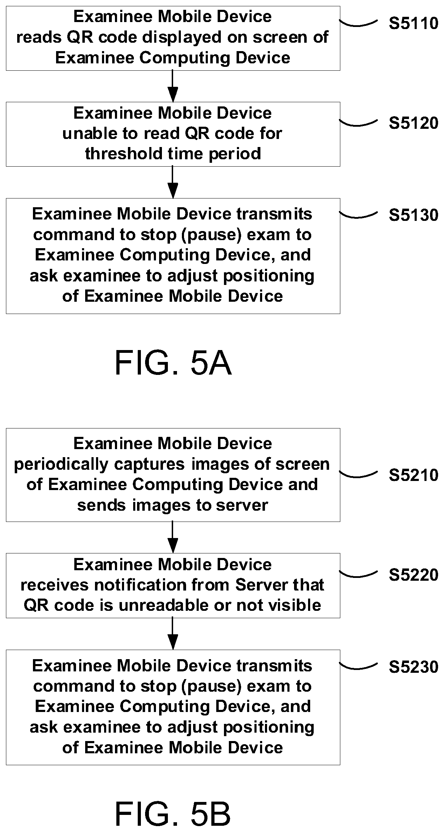

Therefore, as best seen in FIGS. 2A and 2B, the user taking the exam (e.g., Examinee N) must first setup their mobile device 20n in a specific position for capturing various images, video, and/or audio recordings during the exam. There are several predefined parameters which should be satisfied, including but not limited to height (h) of mobile device 20n (or its integrated camera) above the floor, distance (d) of mobile device 20n from computing device 10n (or its display screen), and angle (a). Angle (a) may be the position of mobile device n relative to the x, y and z axes. FIG. 2A shows a rear view from behind the examinee, while FIG. 2B shows a side view. In some example embodiments, the examinee may be presented with instructions for mounting and positioning mobile device 20n with respect to computing device 10n and themselves. The parameters (h, d, and a) may be discrete values or may specify a tolerance range that is less exact. In some other example embodiments, the examinee may perform a trial-and-error process in which one or more images of the screen of computing device 10n are captured and analyzed to determine whether the user has setup mobile device 20n with the proper positioning for enabling the exam proctoring process to be performed. For example, a QR code verification technique could be used to verify that the proper position of mobile device 20n (e.g., parameters (h, d and a)) has been achieved during initial setup and mounting of the mobile device by the examinee, as described further below in connection with FIGS. 5A-5B.

In some example embodiments, mobile device 20n is mounted on a desk or chair of the examinee or a separate stand located behind the examinee, and is positioned within a defined height range from the floor, a defined distance range with respect to the computing device, and a defined viewing angle range (via angle (a)) so as to enable the recording device (e.g., camera) of mobile device 20n to capture one or more images of the QR code on the display of computing device 10n. Various mounting assemblies may be used to maintain the appropriate positioning of mobile device 20n next to the examinee (such as a certain location behind and above the examinee and looking over the examinee or the examinee's shoulder at computing device 10n, for example), including but not limited to clips, flexible arms, cradles, tripods, furniture, shelves and other known equivalents or suitable substitutes that may be readily available or custom designed for this specific purpose.

In another example embodiment, mobile device 20n may be mounted to a motorized apparatus (not shown) that enables full three-hundred and sixty degree rotation (or partial rotation) of mobile device 20n while the recording device (e.g., camera) of mobile device 20n captures the images, video, and audio. Mobile device 20n is configured to transmit a command to the motorized apparatus to rotate according to at least one of predefined time intervals and/or at random time intervals during the exam, or in response to detection of a possible instance of cheating based on analyzing the images, video, or audio captured by the first recording device of computing device 10n or the second recording device of mobile device 20n.

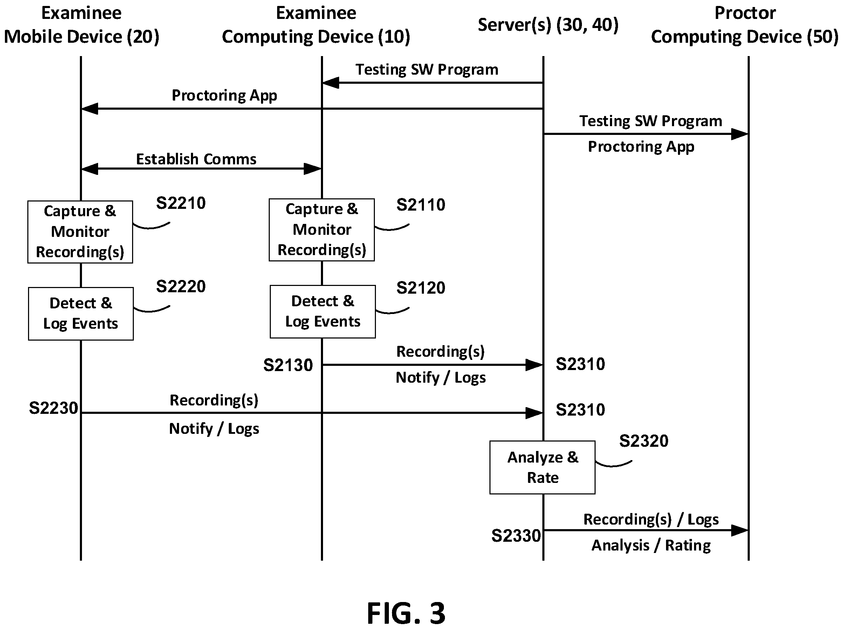

In addition to the mobile device positioning aspect, some other initial system setup operations may be performed between the various components of system 1, as shown in FIG. 3. For example, an examinee computing device 10 (one of 10a-10n) can communicate with one of the servers (e.g., testing server 30) to obtain a testing software program, and an examinee computing device 20 (one of 20a-20n) can communicate with one of the servers (e.g., proctoring server 40) to obtain a proctoring mobile application. The proctor computing device 50 (one of 50x) can also communicate with servers 30 and/or 40 to obtain the testing software program and/or the proctoring mobile application. In addition, a communication session between examinee mobile device 20 and examinee computing device 10 can also be established at the beginning of the online exam and related proctoring process described herein.

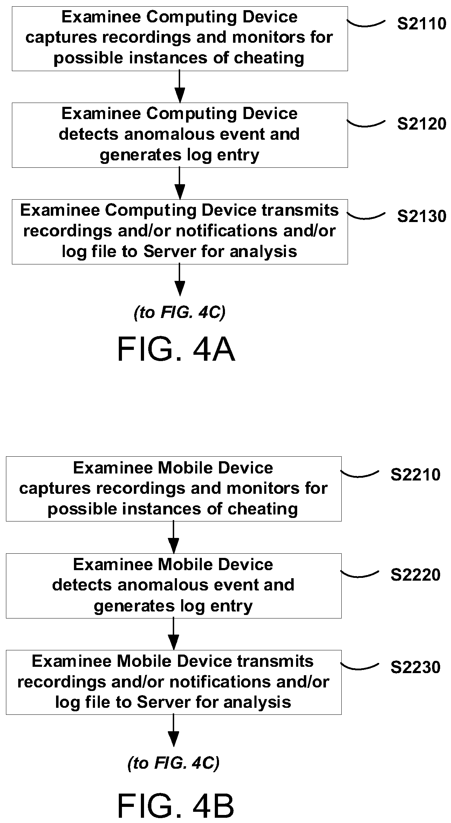

Referring to FIGS. 3 and 4A, the method for proctoring an online exam may include using one of examinee computing devices 10a-10n to capture recordings (images, video, and/or audio) and monitor for possible instances of cheating (step S2110), detect an anomalous event and generate a corresponding log entry (step S2120), and transmit the captured recordings, and/or notifications, and/or a proctoring log file including the log entry associated with the detected anomalous event to one of servers 30 or 40 (step S2130) for storage, further analysis, and access by the proctor of the exam.

Thus, examinee computing device 10a-10n and the first recording device (e.g., camera) may provide a first security/integrity mechanism of system 1. The first recording device may be integrated in or connected to computing device 10a-10n that the examinee (user, student, test taker) will use to take an exam. Modern laptops are typically equipped with a camera integrated in the display. Alternatively, this could be an external webcam in the case of a desktop computer, or a laptop without a camera integrated in the display. The first recording device of computing device 10a-10n is arranged facing the examinee, and enables computing device 10a-10n to capture biometrics (e.g., facial recognition, or compare with registered photo ID) to prevent unauthorized user (imposter) from taking the exam in place of the intended examinee. The first recording device of computing device 10a-10n can also capture images of the user and background environment to ensure no other people are present (to help the student), detect unauthorized materials (e.g., charts or other notes on the wall(s), etc.), detect presence of other recording devices in the room. In addition to images, the first recording device may also capture audio using a microphone (an integrated microphone or an external microphone connected thereto), wherein the captured audio could be used for biometrics (e.g., user verification) and/or to detect voices other than the user (e.g., imposter or helper may be present).

In addition, examinee computing device 10a-10n may also provide a second security/integrity mechanism of system 1. For example, examinee computing device 10a-10n can capture images or video of its display screen (e.g., using screen grabbing or screen-shot techniques) to detect use of unauthorized materials and/or software programs. In some examples, a mechanism is provided to prevent access to unauthorized outside materials (e.g., block access to Internet except for communicating signals in connection with administering the test, close other software programs and browsers), and/or to prevent recording of exam questions by test taker using third party software.

Referring to FIGS. 3 and 4B, the method for proctoring an online exam may also include using one of examinee mobile devices 20a-20n to capture recordings (images, video, and/or audio) and monitor for possible instances of cheating (step S2210), detect an anomalous event and generate a corresponding log entry (step S2220), and transmit the captured recordings, and/or notifications, and/or a proctoring log file including the log entry associated with the detected anomalous event to one of servers 30 or 40 (step S2230) for storage, further analysis, and access by the proctor of the exam.

Thus, examinee mobile device 10a-10n and the second recording device (e.g., camera) may provide a third security/integrity mechanism of the system 1. The second recording device may be integrated in or connected to the mobile device 20a-20n that the examinee will use to take the exam. Modern smartphones and tablets are typically equipped with a camera integrated on one or both sides of the device. The second recording device of mobile device 20a-20n is arranged facing computing device 10a-10n that the examinee uses to take the exam. As described herein, there are various mounting mechanisms may be used and there are specified locations or positioning (e.g., height above floor, distance from user and/or computing device used to take the exam, angle, etc.). In some example embodiments, computing device 10a-10n and/or mobile device 20a-20n can display and/or announce instructions to the user in connection with positioning mobile device 20a-20n correctly (e.g., to enable capturing and verifying of a QR code, for example). The second recording device of mobile device 20a-20n can also capture images of computing device 10a-10n (e.g., including its display screen), the workspace of the examinee (e.g., desktop and lap), and background environment (e.g., walls) to ensure no other people are present (e.g., to take the exam or help the student) and/or detect unauthorized materials (e.g., charts, formulas, or other notes on the wall(s), on the desk or table in front of the student, in the student's lap, etc.). Mobile device 20a-20n effectively looks over the shoulder of the examinee to capture a wide view of the examinee's field of vision and detect potential instances of cheating (e.g., unauthorized materials, other persons present in the room, etc.). In addition to images, the second recording device may also capture audio using an integrated microphone, wherein the captured audio could be used for biometrics (e.g., user verification) and/or to detect voices other than the user (e.g., imposter or helper may be present).

In some example embodiments, mobile device 20a-20n may include a third recording device (e.g., another camera on the opposite side of mobile device 20a-20n). Modern mobile devices, such as smartphones and tablets, may have multiple cameras on opposite sides of the device (e.g., front facing and rear facing). Often, the rear camera has a higher quality (resolution, pixels) than the front camera. Therefore, it may be preferable to use the rear camera as the second recording device that faces computing device 10a-10n and workspace of the examinee, while using the front camera as the third recording device that faces behind the student. Thus, third recording device (e.g., front camera of mobile device 20a-20n) could supplement the first security/integrity mechanism provided by the first recording device of computing device 10a-10n. For example, the third recording device of mobile device 20a-20n could capture images or video which would otherwise be blocked or obscured by the user (or the user's chair, for example) in the images or video captured by the first recording device of computing device 10a-10n.

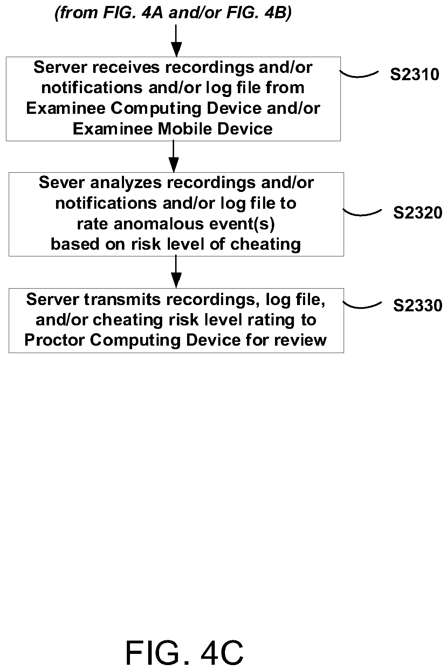

Referring to FIGS. 3 and 4C, the method for proctoring an online exam may further including using one of servers 30 or 40 to receive recordings (images, video, and/or audio), and/or notifications, and/or the proctoring log file from examinee computing devices 10a-10n and/or examinee mobile devices 20a-20n (step S2310), analyze the recordings and/or the notifications and/or the proctoring log file to rate anomalous events detected during the exam based on a risk level of cheating (step S2320), and transmit the recordings, the proctoring log file, and/or the cheating risk level rating to one of proctor computing devices 50x (step S2330) for review by the proctor of the exam.

Thus, the server(s) such as testing server 30 and/or the proctoring server 40 may provide a fourth security/integrity mechanism of system 1. According to some example embodiments, the proctoring process can be entirely (or mostly) automated using artificial intelligence (Al) and machine learning (ML) algorithms, and corresponding trained models for analyzing recordings to detect anomalous events associated with potential instances of cheating and generate ratings of user activities captured during the exam based on risk level. For example, time-stamped log entries are generated for activities occurring during the exam, including any faces detected on the camera (other than the face of the user), any audio detected (other than the voice of the user), or any attempt to open or access a web browser during the exam. Although the system may be unable to actively prevent some types of cheating behavior, the system is still able to detect these activities using various pattern recognition techniques and present a log file to the proctor and rate the risk level of the user's activities during the exam as high risk cheating activity. Further in-depth review of user exams having higher cheating risk scores may then be selectively prioritized by proctors.

The following is a non-exhaustive list of examples of activities that are indicative of a high risk of cheating: a) detecting a second face on the screen of examinee computing device 10a-10n or examinee mobile device 20a-20n (images captured by these devices can be analyzed to detect the presence of another person with the examinee), b) detecting speech during the exam (audio captured by these devices can be analyzed to detect the presence of another person with the examinee), c) opening a secondary browser window while the exam is taking place (which could be used to access unauthorized materials), d) failure to detect the face of the person taking the exam for a threshold period of time (e.g., more than 5 seconds), e) the QR code is not read by examinee mobile device 20a-20n (or server 30, 40) from the screen of examinee computing device 10a-10n for a threshold period of time (e.g., more than 10 seconds in a row), and/or f) attempting to search any question that is on the exam during exam taking. All of these incidences may result in the exam stopping (or pausing temporarily) to inform the examinee that there is a suspicious activity that indicates the possibility of cheating, and each detected instance of suspicious activity is recorded in the exam log for that student. All of these log activities are time-stamped to facilitate the proctor to check the particular time after the exam has been completed and determine whether cheating has actually taken place or not.

In some example embodiments, the exam may be temporarily stopped (or paused) in order to allow for correction of a suspicious condition, where the system can warn the user about the detected event (and optionally, instruct the user how to correct the suspicious condition), and then the exam may automatically resume upon correction of the suspicious condition by the examinee. In some example embodiments, detection of a low-risk event may simply be logged for later analysis while detection of a high-risk event may trigger the system to notify the proctor (e.g., in real-time when the suspicious event is detected, or upon completion of the exam) to perform further review of a particular examinee's captured recordings and corresponding log file. Also, certain examinees may be selected for manual review based on the number, the type, and/or the severity of suspicious events that are captured and detected during the automated proctoring process. Responses to detection of suspicious events can include capturing images/video/audio, generating warnings/alerts and outputting instructions (e.g., re-position mobile device to fix camera alignment, remove object or obstruction blocking the field of view, etc.), performing re-authentication of the examinee's credentials and/or biometrics, providing access to proctor assistance, intervention or review, termination of the exam (e.g., in response to multiple different violations, repeating the same violation, or severe violations), and/or invalidation of each results (e.g., based on further automated analysis by a server and/or manual review by a proctor).

Now referring to FIGS. 5A and 5B, one aspect of the system and method may include a process for verifying a Quick Response (QR) code in connection with the online exam proctoring method described above. The QR code may be displayed on the display screen of examinee computing device 10a-10n, and images of the screen displaying the QR code may be captured by examinee mobile device 20a-20n.

In the example embodiment shown in FIG. 5A, one of examinee mobile devices 20a-20n performs the QR code verification process and communicates with one of examinee computing devices 10a-10n. In this example, examinee mobile device 20a-20n is configured to read (e.g., continuously, constantly, and/or periodically) the QR code displayed on the screen of examinee computing device 10a-10n (step S5110), and if examinee mobile device 20a-20n is unable to read the QR code for a threshold period of time (e.g., more than 10 consecutive seconds) (step S5120), then examinee mobile device 20a-20n transmits a command to stop (or pause) the exam to examinee computing device 10a-10n (S5130), where examinee computing device 10a-10n or examinee mobile device 20a-20n then asks the examinee (via a visible output on the device display and/or an audible output on a device speaker) to adjust positioning of examinee mobile device 20a-20n so as to enable the QR code to be verified by examinee mobile device 20a-20n. The exam will continue (without stopping or pausing) while the QR code verification process is successful, and the exam will resume (after stopping or pausing) once the user has properly adjusted the positioning of examinee mobile device 20a-20n to allow the QR code to be read and verified by examinee mobile device 20a-20n.

In the example embodiment shown in FIG. 5B, one of examinee mobile devices 20a-20n communicates with one of servers 30 or 40, which assists with the QR code verification process. In this example, examinee mobile device 20a-20n captures (e.g., periodically at preset intervals, such as every 30 seconds during the exam) images of the screen of examinee computing device 10a-10n and sends the captured images to one of servers 30 or 40 (step S5210) for verification. If QR code is not received by server 30 or 40, or server 30 or 40 is unable to read the QR code, then examinee mobile device 20a-20n may receive a notification from server 30 or 40 that the QR code is unreadable or not visible (step S5220), and then transmits a command to stop (pause) the exam to examinee computing device 10a-10n (step S5230), where examinee computing device 10a-10n or examinee mobile device 20-20n then asks the examinee (via a visible output on the device display and/or an audible output on a device speaker) to adjust positioning of examinee mobile device 20a-20n so as to enable the QR code to be verified by server 30 or 40. The exam will continue (without stopping or pausing) while the QR code verification process is successful, and the exam will resume (after stopping or pausing) once the user has properly adjusted the positioning of examinee mobile device 20a-20n to allow the QR code to be read and verified by server 30 or 40.

Thus, the second recording device (e.g., camera) of mobile device 20a-20n can also capture images of a QR code that is displayed on the screen of computing device 10a-10n that the examinee is using to take the exam. The QR code could be dynamically generated and unique for each exam, or could be registered at server(s) 30, 40 in advance for each authorized examinee (student). During operation, the QR code may be displayed in a certain defined location of the screen (e.g., an upper part, a lower part, a side, or a corner of a graphical user interface associated with the exam). Preferably, this location is out of the way of examinee taking the online exam, and the QR code has a format (e.g., size and/or color) that is not distracting to the test taker. The size of the QR code may be selected such that the second recording device is able to clearly resolve and read the elements of the code when the second recording device is positioned within the predetermined height above the floor, distance from the first computing device (or its display screen) and viewing angle. This QR code detection and validation process may be performed in various different ways and at different times during the exam. For example, QR code verification may be performed before the exam begins, at one or more times during the exam, and/or when the examinee has completed the exam and submits their answers for review. In some example embodiments, QR code verification can be performed continuously, periodically (at predetermined intervals), intermittently (at random intervals), or the like. In some example embodiments, QR code verification can be performed dynamically in response to a trigger, such as an alert or alarm resulting from detection of a possible instance of cheating by one or more of the other security/integrity mechanisms described above. In some example embodiments (at the start of the exam), the exam will not begin until the correct position and angle of the mobile device is achieved for capturing and verifying the QR code. In some other example embodiments (during the exam), the exam will be stopped (paused) when the QR code is not visible or is unreadable, and the exam will not resume until the correct position and angle of the mobile device is achieved for capturing and verifying the QR code. A failure to validate the QR code at the beginning of the exam, or a failure to validate the QR code during the exam, may result in termination of the exam. In some example embodiments, the mobile device itself may perform the verification of the QR code. In some other example embodiments, the mobile device may send images of the QR code to a server for verification.

According to example embodiments described herein, the system utilizes the user's own smartphone or tablet device to achieve the dual purpose of monitoring the examination process while also locking it down from unauthorized use or communications to prevent or reduce any potential cheating opportunities using the examinee mobile device. Since the examinee's existing devices can be used to perform the methods for proctoring online exams described herein, the system also does not require the examinees to travel to a dedicated testing facility with a specialized proctoring terminal setup or to purchase special electronic devices (e.g., such as an augmented reality (AR) headset or virtual reality (VR) glasses, for example), although such devices could be used according to some alternative example embodiments.

In another aspect, the system may also have a live chat feature integrated therein, which could be either partially or fully automated to assist users with any troubleshooting during the exam. A full video recording of the examinee would also be saved and made available to the proctor after completion of the exam. In a further aspect, the system may also provide the ability to have the proctor check on the examinee during the exam, such as by establishing a communication session between the proctor computing device 50x and examinee computing device 10a-10n or examinee mobile device 20a-20n.

In another aspect, computing device 10a-10n and/or mobile device 20a-20n can be configured to capture images, video, and/or audio continuously, periodically, intermittently, randomly, and/or in response to detection of an anomalous event associated with the possibility of cheating during the exam. In a further aspect, the system may also provide the ability for a proctor to access any given examinee's captured recordings in real-time during the exam, after completion of the exam, and/or in response to detection, logging, and notification of anomalous events associated with potential cheating by the user and/or the server-generated cheating level ratings.

While an exemplary machine-algorithm method for system 1 including examinee computing devices (10a-10n) and examinee mobile devices (20a-20n), server(s) (30, 40), and proctor computing devices (50x), has been described above and with reference to the figures above, it will be understood that certain exemplary embodiments may change the order of steps of the algorithmic method or may even eliminate or modify certain steps.

Having described the exemplary system 1 and corresponding method for proctoring online exams, an exemplary computer environment for implementing the described design and execution is presented next.

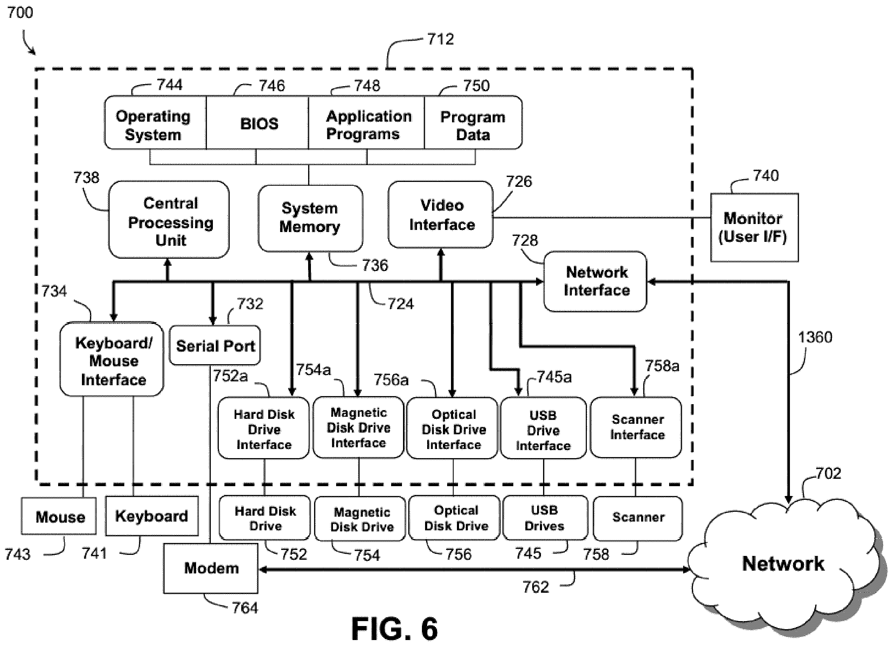

FIG. 6 shows the components of an exemplary computing environment 700 that may be used to implement any of the methods and processing thus far described. Computing environment 700 may include one or more computers 712 (such as, for example, examinee computing devices 10a-10n, examinee mobile devices 20a-20n, servers 30 and 40, and proctor computing devices 50x) comprising a system bus 724 that couples a video interface 726, network interface 728, a keyboard/mouse interface 734, and a system memory 736 to a Central Processing Unit (CPU) 738. A monitor or display 740 is connected to bus 724 by video interface 726 and provides the user with a graphical user interface to view, edit, and submit an online exam as described above. The graphical user interface allows the user to enter commands and information into computer 712 using an interface control that may include a keyboard 741 and a user interface selection device 743, such as a mouse, touch screen, or other pointing device. Keyboard 741 and user interface selection device are connected to bus 724 through keyboard/mouse interface 734. The display 740 and user interface selection device 743 are used in combination to form the graphical user interface which allows the user to implement at least a portion of the present invention. Other peripheral devices may be connected to the remote computer through universal serial bus (USB) drives 745 to transfer information to and from computer 712. For example, cameras and camcorders may be connected to computer 712 through serial port 732 or USB drives 745 so that data representative of a digitally represented still image, video, audio or other digital content may be downloaded to memory 736 or another memory storage device associated with computer 712 such that the digital content may be transmitted to a server (such as server(s) 30, 40) in accordance with the present invention.

The system memory 736 is also connected to bus 724 and may include read only memory (ROM), random access memory (RAM), an operating system 744, a basic input/output system (BIOS) 746, application programs 748 and program data 750. The computer 712 may further include a hard disk drive 752 for reading from and writing to a hard disk, a magnetic disk drive 754 for reading from and writing to a removable magnetic disk (e.g., floppy disk), and an optical disk drive 756 for reading from and writing to a removable optical disk (e.g., CD ROM or other optical media). The computer 712 may also include USB drives 745 and other types of drives for reading from and writing to flash memory devices (e.g., compact flash, memory stick/PRO and DUO, SD card, multimedia card, smart media xD card), and a scanner 758 for scanning items such as still image photographs to be downloaded to computer 512. A hard disk drive interface 752 a, magnetic disk drive interface 754a, an optical drive interface 756a, a USB drive interface 745a, and a scanner interface 758a operate to connect bus 724 to hard disk drive 752, magnetic disk drive 754, optical disk drive 756, USB drive 745 and scanner 758, respectively. Each of these drive components and their associated computer-readable media may provide computer 712 with non-volatile storage of computer-readable instruction, program modules, data structures, application programs, an operating system, and other data for computer 712. In addition, it will be understood that computer 712 may also utilize other types of computer-readable media in addition to those types set forth herein, such as digital video disks, random access memory, read only memory, other types of flash memory cards, magnetic cassettes, and the like.

Computer 712 may operate in a networked environment using logical connections with network 702. Network interface 728 provides a communication path 760 between bus 724 and network 702, which allows, for example, images, videos, notifications, log files and the like to be communicated to the sever for storage, further analysis, and allowing access to an exam proctor. The images, videos, notifications and/or log files, for example, may also be communicated from bus 724 through a communication path 762 to network 702 using serial port 732 and a modem 764. It will be appreciated that the network connections shown herein are merely exemplary, and it is within the scope of the present invention to use other types of network connections between computer 712 and network 702 including both wired and wireless connections.

From the foregoing, it will be seen that this invention is one well adapted to attain all the ends and objects hereinabove set forth together with other advantages which are obvious and which are inherent to the method and apparatus. It will be understood that certain features and sub combinations are of utility and may be employed without reference to other features and sub combinations. This is contemplated by and is within the scope of the claims. Since many possible embodiments of the invention may be made without departing from the scope thereof, it is also to be understood that all matters herein set forth or shown in the accompanying drawings are to be interpreted as illustrative and not limiting.

The constructions described above and illustrated in the drawings are presented by way of example only and are not intended to limit the concepts and principles of the present invention. As used herein, the terms "having" and/or "including" and other terms of inclusion are terms indicative of inclusion rather than requirements.

While the invention has been described with reference to preferred embodiments, it will be understood by those skilled in the art that various changes may be made and equivalents may be substituted for elements thereof to adapt to particular situations without departing from the scope of the invention. Therefore, it is intended that the invention not be limited to the particular embodiments disclosed as the best mode contemplated for carrying out this invention, but that the invention will include all embodiments falling within the scope and spirit of the appended claims.

## Claims

1. A system for proctoring an online exam taken by a user, the system comprising:
a) a first computing device in communication with a network, the first computing device including:
a first memory storing first computer executable instructions configured for administering the online exam,
a first processor configured to execute the first computer executable instructions,
a first display configured to display the online exam, and
a first recording device facing towards the user taking the online exam and configured to capture one or more images, video, or audio to monitor the user and a surrounding environment of the user for possible instances of cheating; and
b) a second computing device in communication with the first computing device over the network, wherein the second computing device is a mobile device, the second computing device including:
a second memory storing second computer executable instructions configured for proctoring the online exam,
a second processor configured to execute the second computer executable instructions, and
a second recording device facing towards the first computing device and configured to capture one or more images, video, or audio to monitor the first computing device and a workspace of the user for possible instances of cheating.

2. The system according to claim 1, wherein the first computing device is configured to perform at least one of:
identifying the user taking the online exam as an authorized user based on the at least one images, video, or audio captured using the first recording device, or
recording one or more screen shots or video clips of the first display while the user is taking the online exam.

3. The system according to claim 1, wherein a quick response (QR) code is displayed on the first display of the first computing device;
wherein the second computing device is configured to:
read the QR code displayed on the first display of the first computing device using the second recording device; and
verify that the second computing device is in a predetermined position relative to the first computing device using the QR code displayed on the first display; and
optionally wherein:
in response to successfully verifying that the second computing device is in the predetermined position, the second computing device is configured to send a command to the first computing device to begin the online exam or allow the online exam to continue.

4. The system according to claim 3, wherein, in response to determining that the second computing device is not in the predetermined position, the second computing device is configured to send a command to the first computing device to pause the online exam, and output instructions asking the user taking the online exam to adjust positioning of the second computing device or remove any obstructions so that the QR code can be verified.

5. The system according to claim 3 or 4, further comprising:
a server in communication with the network,
wherein the second computing device is configured to:
periodically capture one or more images of the QR code using the second recording device, and
send the one or more images of the QR code to the server to verify that the second computing device is in a predetermined position relative to the first computing device using the QR code displayed on the first display;
wherein in response to the server successfully verifying that the second computing device is in the predetermined position, the second computing device or the first computing device is configured to receive a command from the server to begin the online exam or allow the online exam to continue; and
optionally wherein:
in response to the server determining that the second computing device is not in the predetermined position, the second computing device or the first computing device is configured to receive a command from the server to pause the online exam and output instructions asking the user taking the online exam to adjust positioning of the second computing device or remove any obstructions so that the QR code can be verified.

6. The system according to any one of claims 3 to 5, wherein the second computing device is configured to analyze the one or more images, video, or audio captured via the second recording device to identify the possible instance of cheating based on at least one of:
failure to read the QR code displayed on the first display of the first computing device for a threshold period of time,
detection of an unauthorized person being present in the workspace of the user, or
detection of unauthorized materials in the workspace of the user.

7. The system according to any one of claims 3 to 6, wherein the second computing device is mounted on a desk or chair of the user or a separate stand located behind the user, and is positioned within a defined height range from the floor, a defined distance range with respect to the first computing device, and a defined viewing angle range so as to enable the second recording device to capture one or more images of the QR code on the first display of the first computing device.

8. The system according to any one of the preceding claims, wherein, in response to detecting a possible instance of cheating, the first computing device is configured to:
pause the online exam,
output a visible or audible warning to the user taking the online exam indicating the possible instance of cheating and instructing the user how to remedy the possible instance of cheating, and
resume the online exam in response to the first computing device determining that the user has addressed the possible instance of cheating; and
optionally wherein:
the system further comprises a server in communication with the network, wherein, in response to detecting a probable instance of cheating based on a pre-defined threshold or failure of the user to address the possible instance of cheating, the first computing device is configured to terminate the online exam and transmit a notification to the server.

9. The system according to any one of the preceding claims, wherein, in response to detecting a possible instance of cheating, the second computing device is configured to:
transmit a command to the first computing device to pause the online exam,
output a visible or audible warning to the user taking the online exam indicating the possible instance of cheating and instructing the user how to remedy the possible instance of cheating, and
transmit a command to the first computing device to resume the online exam in response to the second computing device determining that the user has addressed the possible instance of cheating.

10. The system according to claim 9, further comprising:
a server in communication with the network,
wherein, in response to detecting a probable instance of cheating based on a pre-defined threshold or failure of the user to address the possible instance of cheating, the second computing device is configured to:
transmit a command to the first computing device to terminate the online exam, and
transmit a notification to the server indicating the probable instance of cheating by the user.

11. The system according to any one of the preceding claims, wherein the first computing device is configured to analyze the one or more images, video, or audio captured via the first recording device to identify the possible instances of cheating based on at least one of:
failure to identify the user as an authorized test taker,
detection of an unauthorized person taking the online exam,
detection of an unauthorized person being present in the surrounding environment of the user,
detection of the opening of a secondary browser window or an attempt to search an exam question while the online exam is taking place, or
detection of unauthorized materials in the surrounding environment of the user.

12. The system according to any one of the preceding claims, wherein the second computing device is mounted to a motorized apparatus that enables three hundred and sixty degree rotation of the second computing device while the second recording device captures the one or more images, video, and audio, and
wherein the second computing device is configured to transmit a command to the motorized apparatus to rotate according to at least one of:
predefined time intervals and/or at random time intervals during the online exam, or
in response to detection of a possible instance of cheating based on analyzing the one or more images, video, or audio captured by the first recording device of the first computing device or the second recording device of the second computing device.

13. The system according to any one of the preceding claims, wherein the second computing device further includes a third recording device facing in a direction opposite the second recording device, wherein the third recording device is configured to capture one or more of images, video, and audio to enable monitoring the surrounding environment of the user for possible instances of cheating.

14. The system according to any one of the preceding claims, further comprising:
a server in communication with the network,
wherein the first computing device is configured to:
analyze the one or more images, video, or audio captured using the first recording device to detect an anomalous event indicating a possible instance of cheating;
generate a log entry identifying the anomalous event and a time-stamp; and
transmit a proctoring log file including the log entry, along with the captured one or more images, video, or audio, to the server for storage and further analysis.

15. The system according to claim 14, wherein the server is configured to:
receive the proctoring log file along with the one or more images, video, or audio captured using the first recording device from the first computing device;
analyze the proctoring log file and the one or more images, video, or audio based on one or more of artificial intelligence (Al) and machine learning (ML) algorithms to generate a rating associated with a level of user activities during the online exam as a low risk, medium risk, or high risk of cheating; and
enable a proctor to access the proctoring log file, the captured one or more images, video or audio, and review the rating associated with the level of user activities during the online exam to confirm whether or not cheating has occurred.

16. The system according to any one of the preceding claims, further comprising:
a server in communication with the network,
wherein the second computing device is configured to:
analyze the one or more images, video, or audio captured using the second recording device to detect an anomalous event indicating a possible instance of cheating;
generate a log entry identifying the anomalous event and a time-stamp; and
transmit a proctoring log file including the log entry, along with the captured one or more images, video, or audio, to the server for storage and further analysis.

17. The system according to claim 16, wherein the server is configured to:
receive the proctoring log file along with the one or more images, video, or audio captured using the second recording device from the second computing device;
analyze the proctoring log file and the one or more images, video, or audio based on one or more of artificial intelligence (Al) and machine learning (ML) algorithms to generate a rating associated with a level of user activities during the online exam as a low risk, medium risk, or high risk of cheating; and
enable a proctor to access the proctoring log file, the captured images, video or audio, and review the rating associated with the level of user activities during the online exam to confirm whether or not cheating has occurred.

18. The system according to any one of the preceding claims, further comprising:
a proctor computing device in communication with the network; and
a server in communication with the network, wherein the server is configured to perform at least one of:
identifying the user as an authorized user based on comparing the one or more images, video, or audio captured via the first recording device to stored authentication information associated with the authorized user,
verifying a QR code associated with the online exam that is displayed on the first display of the first computing device and captured via the second recording device of the second computing device,
receiving and storing the one or more images, video, or audio captured by the first recording device of the first computing device and the second recording device of the second computing device,
analyzing the one or more images, video, or audio captured by the first recording device of the first computing device and the second recording device of the second computing device to identify or confirm the possible instance of cheating, and
transmitting a notification to the proctor computing device in response to detection of a possible instance of cheating by the second computing device or the first computing device of the user or confirmation of the possible instance of cheating by the server.

19. The system according to any one of the preceding claims, further comprising:
a server in communication with the network; and
a proctor computing device in communication with the network, wherein the proctor computing device is configured to perform at least one of:
receiving a notification from the first computing device, the second computing device, or the server in connection with detection of a possible instance of cheating by the user taking the online exam,
establishing a communication session with the user taking the online exam via the second computing device or the first computing device of the user to provide instructions or assistance to the user, or to enable live remote monitoring of the user by a proctor during the exam, or
accessing the server to enable the proctor to manually review the one or more images, video, or audio captured by the first recording device of the first computing device and the second recording device of the second computing device that are stored by the server to determine whether the detection of the possible instance of cheating by the server or by the second computing device or the first computing device of the user is confirmed or a false alarm.

20. A method for proctoring an online exam taken by a user utilizing a mobile device in communication with a first computing device over a network, the method comprising:
positioning the mobile device so that a recording device of the mobile device faces towards the first computing device; and
capturing one or more of images, video, or audio using the recording device of the mobile device to monitor the first computing device and a workspace and surrounding environment of the user for possible instances of cheating during the online exam.
